# EUROPEAN PATENT SPECIFICATION

(11) **EP 1 407 142 B1**
(45) Date of publication and mention of the grant of the patent: **25.01.2006**
(21) Application number: 02747743.9
(22) Date of filing: 17.07.2002
(51) Int. Cl.: F03D 9/00, F03D 9/02

(54) **MOBILE WIND AND SOLAR ENERGY AGGREGATE**
MOBILES WIND- UND SONNENENERGIEKRAFTAGGREGAT
CENTRALE DESTINEE A GENERER DE L'ENERGIE EOLIENNE ET SOLAIRE

(43) Date of publication of application: 14.04.2004
(73) Proprietor: Ceap B.V., 7044 AE Lengel (NL)
(72) Inventor: PAS, Peter, Alexander, Josephus, NL-7044 AE Lengel (NL)
(74) Representative: van Westenbrugge, Andries
(86) International application number: PCT/NL2002/000481
(87) International publication number: WO 2003/008803

(56) References cited:
- EP-A- 0 237 445
- EP-A- 0 515 329
- WO-A-94/20802
- DE-A- 3 405 466
- DE-A- 3 708 637
- DE-A- 10 000 874
- DE-C- 375 498
- DE-C- 19 646 612
- DE-U- 9 321 520
- FR-A- 2 614 368
- US-A- 4 326 013

## Description

The present invention relates to a mobile power station having a transportable housing. The invention especially relates to such a station according to the preamble of claim 1.

Mobile power stations having a transportable housing in which they are housed are known. Consideration can be given, for example, to a diesel generator that can be mounted on a trailer or lorry.

Mobile power stations of this type are used in particular for generating energy, in particular electrical energy, in locations where there is no connection to the mains power supply. The disadvantage of the known mobile power stations is, however, that these use fossil fuels, such as diesel oil, for generating electricity and that during the combustion of these fossil fuels exhaust gases are produced which are released into the environment and thus introduce harmful or at least undesirable substances into the environment.

A mobile power station according to the preamble of claim 1 is known from WO-A-94.20802.

Further, DE-3.708.637 discloses a non-mobile power station having a hydrogen engine/turbine with generator.

The aim of the present invention is, in particular, to provide a mobile power station that is of universal applicability and is able to generate sustainable energy everywhere, without there being a need for a mains power supply to be present, and which can continue to supply electrical energy autonomously even in the absence of external energy sources, such as wind and sun, and the absence of any other external energy supply.

The abovementioned aim is achieved according to the invention with a mobile power station according to claim 1. The hydrogen cell, which is also termed a fuel cell, contains a membrane that ensures that the H₂ gas bonds with the O₂ gas by means of a redox reaction, a reaction in which a stream of electrons from 2 x H₂ + O₂ gives 2 x H₂O. Both the H₂ and the O₂ undergo a transition from neutral particles to electrically charged particles which release ions during their transition.

Where mention is made of combustion in this application this refers in particular to oxidation of hydrogen to give water. This can also be referred to as chemically controlled conversion of hydrogen to water.

The mobile power station according to the invention is capable of generating electrical energy by means of the wind turbine and/or the solar cell panel and of supplying this electrical energy to a consumer. If the consumer does not require the generated electrical energy immediately, or if the generated electrical energy is in excess of the requirement at that point in time, the mobile power station according to the invention is able to store this generated electrical energy in the storage means in order subsequently to be able to supply this energy when there is demand for the electrical energy but there is no wind and/or sun for generating electrical energy by means of the wind turbine or the solar panel, respectively, or when the demand for electrical energy is higher than the amount of energy that can be produced at that point in time by the wind turbine or the solar panel, respectively. To this end the storage means comprise a battery and a hydrogen system. The battery, which, of course, can consist of a number of accumulators, has the disadvantage that it takes up a relatively large volume but has the advantage that it is able to supply electrical energy immediately when this is required. The hydrogen system is capable of forming a much larger energy buffer. To this end this hydrogen system comprises a hydrogen generator which decomposes water into hydrogen and oxygen by means of electric power supplied to it. Such a hydrogen generator can be a so-called caustic potash decomposition unit. The hydrogen system further comprises a hydrogen tank for storing the hydrogen produced by the hydrogen generator. Hydrogen can then be taken off from the hydrogen tank when there is a demand for electrical energy, in order to supply this hydrogen to a hydrogen cell in which the hydrogen is burned with the generation of electrical energy. The combustion of hydrogen is a clean combustion or 100% clean chemically controlled conversion of hydrogen to water, which has hardly any or no associated disadvantages for the environment. The battery will preferably also be actively connected to the hydrogen cell in order to be able to bring this hydrogen cell into operation from stationary when there is a demand for electrical energy. A mobile power station of this type can relatively easily, on the one hand, be so designed that it can be accommodated in its entirety in, for example, a 40 foot sea container and, on the other hand, is capable of providing a household with adequate electrical energy.

A mobile power station according to the invention will advantageously further comprise a solar collector panel that is actively connected to a boiler for hot water. In this way the mobile power station is also capable of supplying hot water, the water being heated in the boiler by the heat captured in the solar collector panel, and of dispensing water to be heated in said boiler. This entire unit can also still easily be accommodated in the said 40 foot container, whilst the capacity to supply hot water is adequate for an average household.

In order to allow the mobile power station to operate autonomously, it is preferable according to the invention if this has a water tank for rainwater, which water tank is actively connected via a filter system, preferably of the membrane type, to the hydrogen generator as well as preferably also to the boiler. In this way connection of the mobile power station to the water supply is superfluous and except in the case of inadequate rainfall a water supply can be completely dispensed with.

According to an advantageous embodiment of the invention, the transportable housing is a container, such as a 20, 30 or 40 foot freight container or a 20, 30 or 40 foot sea container. Such containers are relatively inexpensive and readily available and have the very significant advantage that because of their standard dimensions they can easily be placed on lorries, trains and ships and transported to their destination.

The wind turbine can be erected separately from the housing. However, with a view to simple, rapid and reliable erection of the mobile power station at the destination, it is preferable if the wind turbine is mounted on the housing and extends upwards from the roof of the housing, or at least can be brought into an active position extending upwards from the roof of the housing. With this arrangement the wind turbine, in particular the column on which the rotor is mounted, can extend through the roof of the housing in order to be fixed to the base of the housing or some other interior housing. In order, on the one hand, to obtain a transportable housing that is easy to manhandle and, on the other hand, a housing that is stable in the position ready for use, it is preferable according to the invention if the housing has a block-shaped base frame and if extendable supports are provided on opposite sides, in particular opposite longitudinal sides, of the housing. The extendable supports, which can also be provided with jacks to enable level support on the ground, ensure that the housing cannot be blown over as a result of the wind turbine on top of it.

According to the invention the storage means will advantageously be accommodated in the housing and the housing will be provided with vents. These vents serve to ensure that any gases escaping from the battery or the hydrogen system are discharged to the outside in order to prevent explosive gas mixtures occurring in the housing.

So that the solar energy can be utilised in as optimum a manner as possible, it is preferable if the solar cell panel and/or the solar collector panel are/is, or at least can be, mounted on hinges on the outside of the housing. It is optionally conceivable to accommodate the solar cell panel and/or the solar collector panel in the housing during transport in order to prevent them from being damaged. The hinged mounting makes it possible to angle the solar cell panel and/or the solar collector panel towards the sun. With this arrangement it is optionally also readily conceivable for a control device also to be coupled to the solar cell panel and/or the solar collector panel, which control device is equipped to allow the solar cell panel or solar collector panel to follow the position of the sun in the sky.

The present invention will be explained in more detail below with reference to an illustrative embodiment shown diagrammatically in the drawing. In the drawing:
Fig. 1 shows a highly diagrammatic, perspective view of the exterior of a mobile power station according to the invention; and
Fig. 2 shows a highly diagrammatic, perspective view of the interior of a mobile power station according to the invention.

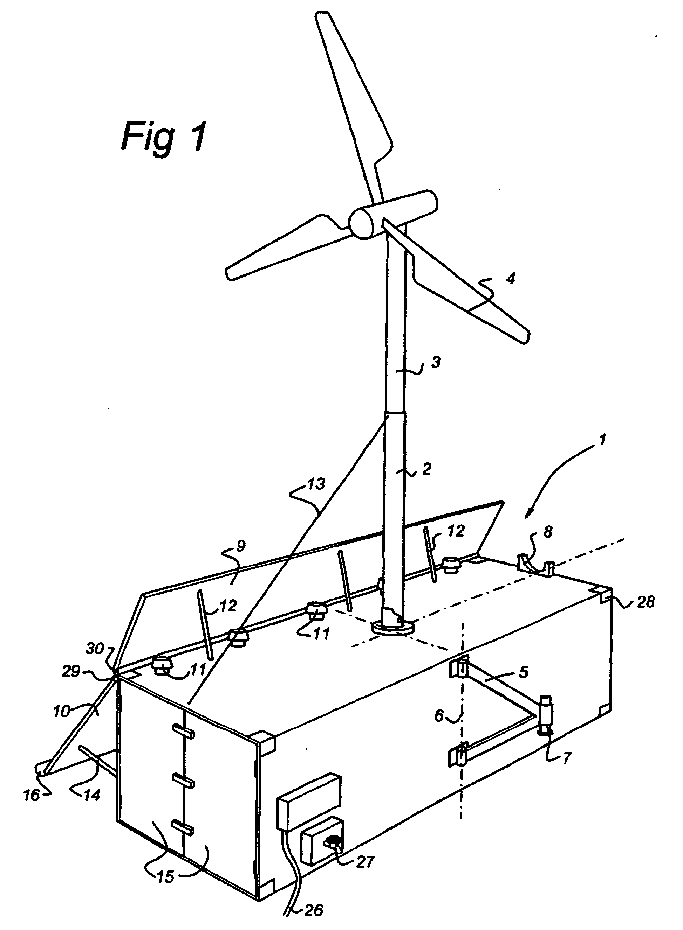

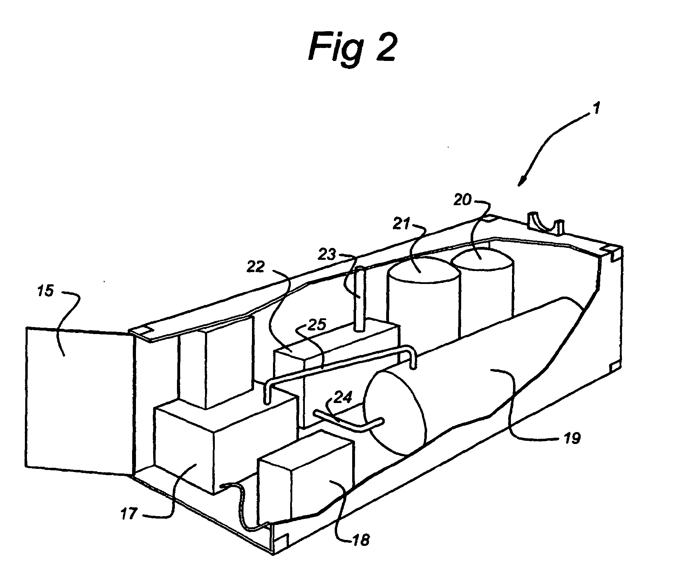

Figs 1 and 2 show an example of an embodiment, and specifically a preferred embodiment, of a mobile power station according to the invention.

The mobile power station shown comprises a transportable housing in the form of a 40 foot sea container 1 with conventional corner castings 28 and two doors 15 at one end. Configuration of the mobile power station in and on such a container 1 has the major advantage that this makes it possible to transport the mobile power station using means already available for the transport of such sea containers.

The mobile power station is provided on the roof with a wind turbine 2, 3, 4 which can be held upright by a guy wire 13 and which can be lowered in the longitudinal direction of the container 1 to lie in support 8 in a horizontal position. The wind turbine comprises a telescopic column 2, 3, which when erected in the use position extends upwards from the roof of the container, with a wind turbine head provided with rotor blades 4 thereon.

The container 1 is provided with a panel 10 on one longitudinal side and optionally on two longitudinal sides. This panel 10 is a solar cell panel. This solar cell panel can be opened out with respect to the adjacent longitudinal wall of the container 1 by means of a boom 14, whilst this panel hinges about a hinge 29 running in the longitudinal direction of the container 1. The boom 14 can form part of a control device, which is equipped to be able to adjust the angle of the solar cell panel 10 with respect to the vertical as a function of the position of the sun in the sky. By designing the extender mechanism 14 in a suitable manner it is also conceivable that the solar cell panel 10 is opened outwards by more than 90° about hinge axis 29 in order to be facing the sun should this be on the right-hand side of the page of the drawing.

A solar collector panel 9 is provided on the roof of the container 1, which panel can be brought into an angled position directed towards the sun by means of extender arms 12, for example telescopic extender arms 12. These solar collector panels 9 are joined to the container 1 by means of hinges along a hinge axis 30 that extends in the longitudinal direction of the container 1. It should be clear that several solar collector panels 9 can have been provided on the roof of the container 1 and also that it is conceivable that several solar cell panels 10 can have been provided on one longitudinal side of the container. It is also very readily conceivable to change over the position of the solar cell panels 10 and solar collector panels 9, to provide both solar cell panels 10 and the solar collector panels 9 on the roof of the container 1, to provide both solar cell panels 10 and solar collector panels 9 on one or two longitudinal sides of the container and to make other combinations thereof.

Vents 11, consisting of a vent opening and a cover placed over this to prevent ingress of rain, are also provided in the roof of the container 1.

In order to prevent the container 1 from being blown over or falling over, in particular when strong gusts of wind are acting on the wind turbine 1, a support system 5 that can be swung out is provided on both longitudinal sides of the container 1. The support system 5 consists of two arms that can be pivoted about hinge axis 6 and meet at a common point and at that point are equipped with a jack 7 that is adjustable in the vertical direction. In Fig. 1 the support system 5 is shown in the transport position, in the sense that it is folded back against the longitudinal side wall of the container 1. It should be clear that this support system 5 can be swung through 90° or optionally more with respect to the container wall.

The container 1 is provided on the outside, but can optionally also be provided on the inside, with a connection 26 for electrical energy, or to put it more accurately electric power, as well as a connection 27 for hot water.

With reference to Fig. 2, the following are accommodated inside the container 1:
a tank 19 for storing hydrogen, H₂,
a boiler 20 for producing and storing hot water,
a storage vessel 21 for rainwater, which, inter alia, can be collected by means of a gutter 16 at the bottom of the solar cell panel 10 and is fed to the rainwater vessel 21 by means of a pump,
a hydrogen generator 22 with an oxygen discharge 23 and a hydrogen discharge 24 leading to the hydrogen tank 19,
a fuel cell 17 suitable for generating electrical energy from hydrogen supplied via line 25 from the tank 19,
a battery 18 for storing and supplying electrical energy.

The mobile power station according to the invention is capable of producing electrical energy from the sun or the wind by means of the solar cell panel 10 provided with solar cells and/or the wind turbine 2, 3, 4, respectively, and supplying this electrical energy via connection 26 to a user and/or storing this electrical energy in the battery 18 and/or by means of this electrical energy generating hydrogen in the hydrogen generator by electrolysis of suitably filtered rainwater, which hydrogen is fed via line 24 to the tank 19 for storage, as well as generating oxygen, which is discharged into the environment via line 23. The hydrogen stored in the tank 19 can be fed at a suitable point in time, depending on the demand for electrical energy, to the fuel cell 17 in order to generate electrical energy in said fuel cell by combustion of the hydrogen, which electrical energy can then be supplied to the end user and/or can be fed to the battery 18 for storing in said battery 18. Electrical energy from the battery 18 and/or electrical energy originating from the wind turbine 2, 3, 4 or the solar cell panel 10 can be used to start up the fuel cell. It should be clear that for the purposes of the abovementioned active connections, the necessary cabling, in particular for electrical leads, which is not shown, will have been laid and also that the necessary transformers, control systems, etc., which are not shown and are also not discussed further, will have been provided, which for a person skilled in the art are no more than obvious and standard.

The solar collector 9 and boiler 20, when can be regarded as optional, provide the possibility that the mobile power station is also able to meet the need for hot water. The water to be heated in the boiler 20 could originate from the rainwater store 21, after suitable filtering and, if necessary, suitable purification, but can also originate from a storage vessel, that is not shown, to be installed outside the container 1 or from the mains water supply. Water circulated through a loop will be heated in the solar collector 9 by the sun in order then to be fed to the boiler 20 and there to transfer heat, via a heat exchanger that is not shown, to the water contained in the boiler, in order, after heat transfer, to be returned to the solar collector 9 to absorb heat again from the sun.

An example will be given below with a few indicative values for a mobile power station according to the invention, which is suitable for meeting the needs of a household. These values are:
- the solar panel 10 will contain approximately 24 m² of solar cells;
- the solar collector 9 will occupy a surface area of approximately 12 m²;
- the wind turbine can be a turbine with a power of 1.5 to 3 kW, such as, for example, approximately 2.5 kW;
- the hydrogen tank 19 can have a capacity of approximately 5m³ and be able to withstand an operating pressure of approximately 25 bar;
- the water tank can have a capacity of approximately 2 m³. In this example the water tank 21 containing rainwater has been sized mainly with regard to adequate capacity for the hydrogen generator. Surplus water, optionally after storage in an additional container that is not shown, can be used for flushing toilets, etc.

A mobile power station of this type can provide a household with electric power with a maximum peak load of approximately 5,000 watt when the sun is shining and wind is blowing at 6 m/s. As a consequence of the battery and the stored hydrogen, the mobile power station can also provide the household with electric power when there is no wind or sun. The battery 18, or a number of batteries 18, as well as the hydrogen system is useful for this purpose.

With regard to the hydrogen system, the following values may be mentioned in this example. When the hydrogen tank 19 is filled to 20 bar there is approximately 100 m³ hydrogen available for generating power. With a yield of the order of magnitude of 80%, this gives approximately 400 kWh power. This is more than adequate for two months power consumption by an average family, including the use of a dishwasher and a washing machine.

If the mobile power station is provided with a suitable connection for this, the hydrogen from the hydrogen tank 19 can also be used to drive a vehicle, such as a car. The vehicle will then first store the hydrogen in its own tank, in order to be able to operate independently of the container 1.

Surplus electrical energy can optionally be supplied directly to the mains power supply.

For reasons of safety, detectors for, in particular, hydrogen will have been provided inside the container, as well as, optionally, detectors for gases originating from the battery, and warning systems coupled to said detectors or further safety measures for ventilation of the interior of the container.

The mobile power station according to the invention is regarded as a mobile unit and is thus MOVABLE PROPERTY (and not immovable property). Consequently under existing legislation planning permission is NOT required for this design and as a result it can be used on a large scale without going through official channels.

The container can be finished in brown and green colouring such that it does not produce a blot on the landscape in its surroundings. The pretty colour scheme will result in camouflage of the functionality and at a distance will create the impression of a garden shed.

## Claims

1. Mobile power station having a transportable housing (1) provided with:
➢ a wind turbine (2, 3, 4) and/or
➢ a solar cell panel (10) containing solar cells and
➢ storage means (18) for storing electrical energy and delivering electrical energy,
wherein the storage means comprise a battery (18); and
wherein the wind turbine (2, 3, 4) and the solar panel (10) respectively, are connected to the storage means (18) for supplying electrical energy generated by the wind turbine (2, 3, 4) and the solar panel (9, 10), respectively, to said storage means (18),
**characterized in that** the storage means further comprise a hydrogen system (19, 22, 23, 24, 25), and
wherein the hydrogen system comprises a hydrogen generator (22), a hydrogen tank (19), connected to the hydrogen generator (22), for storing hydrogen produced using the hydrogen generator (22), and a fuel cell (17), connected to the hydrogen tank (19), for generating electrical energy by oxidation of hydrogen.

2. Mobile power station according to Claim 1, containing a water tank (21) for rainwater, wherein the water tank is connected via a filter system, preferably of the membrane type, to the hydrogen generator (22).

3. Mobile power station according to Claim 1 or 2, containing a solar collector panel (9) that is connected to a boiler (20) for hot water.

4. Mobile power station according to claims 3 and 2, wherein the water tank (21) is connected to the boiler (20).

5. Mobile power station according to one of the preceding claims, wherein the transportable housing is a container (1), such as a 20, 30 or 40 foot freight or sea container.

6. Mobile power station according to one of the preceding claims, wherein the wind turbine (2, 3, 4) is mounted on the housing (1) and extends upwards from the roof of the housing (1), or at least can be brought into an active position extending upwards from the roof of the housing (1).

7. Mobile power station according to Claim 6, wherein the housing (1) has a block-shaped base frame and wherein extendable supports (5, 7) are provided on opposite sides, in particular opposite longitudinal sides, of the housing (1).

8. Mobile power station according to one of the preceding claims, wherein the hydrogen system (15, 22, 23, 24, 25) is accommodated in the housing (1) and wherein the housing is provided with vents (11).

9. Mobile power station according to one of the preceding claims, wherein the solar cell panel (10) and/or the solar collector panel (9) are/is, or at least can be, mounted on hinges (29, 30) on the outside of the housing (1).

10. Mobile power station according to one of the preceding claims, wherein the power station is provided with a connection for filling the tank of a vehicle.

## Patentansprüche

1. Mobiles Kraftwerk mit einem transportablen Gehäuse (87), versehen mit:
• einer Windturbine (2, 3, 4) und/oder
• einer Solarzellentafel (10), die Solarzellen enthält, und
• Speichermitteln (18) zur Speicherung elektrischer Energie und zur Lieferung elektrischer Energie,
wobei die Speichermittel eine Batterie (18) umfassen, und
wobei die Windturbine (2, 3, 4) bzw. die Solarzellentafel (10) mit den Speichermitteln zur Lieferung elektrischer Energie, die von der Windturbine (2, 3, 4) bzw. der Solarzellentafel (9, 10) erzeugt wird, an die Speichermittel (18) verbunden ist,
**dadurch gekennzeichnet, daß** die Speichermittel ferner ein Wasserstoffsystem (19, 22, 23, 24, 25) enthalten, und wobei das Wasserstoffsystem einen Wasserstoffgenerator (22), einen Wasserstofftank (19), der mit dem Wasserstoffgenerator (22) verbunden ist, um von dem Wasserstoffgenerator (22) erzeugten Wasserstoff zu speichern, und eine Brennstoffzelle (17) enthält, die mit dem Wasserstofftank (19) zur Erzeugung elektrischer Energie durch Oxidation von Wasserstoff verbunden ist.

2. Mobiles Kraftwerk nach Anspruch 1, das einen Wassertank (21) für Regenwasser enthält, wobei der Wassertank über ein Filtersystem, vorzugsweise des Membrantyps, mit dem Wasserstoffgenerator (22) verbunden ist.

3. Mobiles Kraftwerk nach Anspruch 1 oder 2, das eine Solarkollektortafel (9) enthält, die mit einem Boiler (20) für heißes Wasser verbunden ist.

4. Mobiles Kraftwerk nach den Ansprüchen 3 und 2, bei dem der Wassertank (21) mit dem Boiler (20) verbunden ist.

5. Mobiles Kraftwerk nach einem der vorhergehenden Ansprüche, bei dem das transportable Gehäuse ein Behälter (1), etwa ein 20-, 30- oder 40-Fuß Fracht- oder Seecontainer ist.

6. Mobiles Kraftwerk nach einem der vorhergehenden Ansprüche, bei dem die Windturbine (2, 3, 4) auf dem Gehäuse (1) montiert ist und sich vom Dach des Gehäuses (1) aufwärts erstreckt, oder zumindest in einer sich von dem Dach des Gehäuses (1) aufwärts erstreckende aktive Position bringbar ist.

7. Mobiles Kraftwerk nach Anspruch 6, bei dem das Gehäuse (1) einen blockförmigen Basisrahmen aufweist, wobei ausziehbare Stützen (5, 7) an entgegengesetzten Seiten, insbesondere entgegengesetzten Längsseiten des Gehäuses (1) vorgesehen sind.

8. Mobiles Kraftwerk nach einem der vorhergehende Ansprüche, bei dem das Wasserstoffsystem (19, 22, 23, 24, 25) in dem Gehäuse (1) untergebracht ist, wobei das Gehäuse mit Entlüftungen (11) versehen ist.

9. Mobiles Kraftwerk nach einem der vorhergehenden Ansprüche, bei dem die Solarzellentafel (10) und/oder die Solarkollektortafel (9) an Gelenken (29, 30) an der Außenseite des Gehäuses (1) montiert sind bzw. ist oder zumindest montiert werden können bzw. kann.

10. Mobiles Kraftwerk nach einem der vorhergehenden Ansprüche, bei dem das Kraftwerk mit einer Verbindung zum Befüllen des Tanks eines Fahrzeugs versehen ist.

## Revendications

1. Centrale électrique mobile comprenant un logement (1) transportable pourvu :
- d'une éolienne (2, 3, 4) et/ou
- d'un panneau solaire (10) contenant des cellules solaires et
- des moyens de stockage (18) pour stocker de l'énergie électrique et pour fournir de l'énergie électrique,
dans laquelle les moyens de stockage comprennent une batterie (18) ; et
dans laquelle l'éolienne (2, 3, 4) et le panneau solaire (10), respectivement, sont connectés aux moyens de stockage (18) pour fournir de l'énergie électrique générée par l'éolienne (2, 3, 4) et le panneau solaire (9, 10), respectivement, auxdits moyens de stockage (18),
**caractérisée en ce que** les moyens de stockage comprennent en outre un système à hydrogène (19 ; 22, 23, 24, 25) ; et
dans laquelle le système à hydrogène comprend un générateur d'hydrogène (22), un réservoir d'hydrogène (19), connecté au générateur d'hydrogène (22), pour stocker l'hydrogène produit à l'aide du générateur d'hydrogène (22), et une pile à combustible (17), connectée au réservoir d'hydrogène (19), pour générer de l'énergie électrique par oxydation de l'hydrogène.

2. Centrale électrique mobile selon la revendication 1, contenant un réservoir d'eau (21) pour l'eau de pluie, dans laquelle le réservoir d'eau est connecté via un système de filtre, de préférence du type à membrane, au générateur d'hydrogène (22).

3. Centrale électrique mobile selon la revendication 1 ou 2, contenant un absorbeur solaire (9) qui est connecté à une chaudière (20) pour l'eau chaude.

4. Centrale électrique mobile selon les revendications 2 et 3, dans laquelle le réservoir d'eau (21) est connecté à la chaudière (20).

5. Centrale électrique mobile selon l'une quelconque des revendications précédentes, dans laquelle le logement transportable est un conteneur (1), comme un conteneur de fret ou de transport marin de 20, 30 ou 40 pieds.

6. Centrale électrique mobile selon l'une quelconque des revendications précédentes, dans laquelle l'éolienne (2, 3, 4) est montée sur le logement (1) et s'étend vers le haut à partir du haut du logement (1), ou qui peut au moins être amenée dans une position active s'étendant vers le haut à partir du haut du logement (1).

7. Centrale électrique mobile selon la revendication 6, dans laquelle le logement (1) présente un cadre de base en forme de bloc et dans laquelle des supports pouvant s'étendre (5, 7) sont prévus sur les côtés opposés, en particulier les côtés longitudinaux opposés, du logement (1).

8. Centrale électrique mobile selon l'une quelconque des revendications précédentes, dans laquelle le système à hydrogène (19, 22, 23, 24, 25) est accueilli dans le logement (1) et dans laquelle le logement est pourvu d'évents (11).

9. Centrale électrique mobile selon l'une quelconque des revendications précédentes, dans laquelle le panneau solaire (10) et/ou l'absorbeur est(sont) ou au moins peut(peuvent) être monté(s) sur des charnières (29, 30) à l'extérieur du logement (1).

10. Centrale électrique mobile selon l'une quelconque des revendications précédentes, dans laquelle la centrale mobile est pourvue d'un raccordement pour remplir le réservoir d'un véhicule.
